(19) Europäisches Patentamt
European Patent Office
Office européen des brevets

(11) **EP 0 517 872 B1**

(12) **EUROPÄISCHE PATENTSCHRIFT**

(45) Veröffentlichungstag und Bekanntmachung des Hinweises auf die Patenterteilung:
**16.09.1998 Patentblatt 1998/38**

(21) Anmeldenummer: **92901289.6**

(22) Anmeldetag: **07.01.1992**

(51) Int. Cl.$^6$: **A63F 9/08**

(86) Internationale Anmeldenummer:
**PCT/DE92/00004**

(87) Internationale Veröffentlichungsnummer:
**WO 92/11911 (23.07.1992 Gazette 1992/19)**

(54) **VERWANDLUNGSKÖRPER**

TRANSFORMABLE BODY

CORPS DE TRANSFORMATION

(84) Benannte Vertragsstaaten:
**AT BE CH DE DK ES FR GB IT LI LU NL SE**

(30) Priorität: **08.01.1991 DE 9100132 U**

(43) Veröffentlichungstag der Anmeldung:
**16.12.1992 Patentblatt 1992/51**

(73) Patentinhaber:
**Pfeffer, Klaus Dieter**
**61200 Wölfersheim (DE)**

(72) Erfinder: **Pfeffer, Klaus Dieter**
**61200 Wölfersheim (DE)**

(56) Entgegenhaltungen:
**DE-U- 8 912 392**          **FR-A- 2 614 210**
**GB-A- 2 107 200**          **GB-A- 2 108 395**
**US-A- 2 992 829**          **US-A- 3 662 486**

Printed by Xerox (UK) Business Services
2.16.3/3.4

**Beschreibung**

Die Erfindung betrifft einen Tetraederring, der aus mehreren Einzelkörpern zusammengesetzt ist. Die Literaturstelle Schatz, Paul: Rhythmusforschung und Technik: I Der umstülpbare Würfel; II Die polysomatische Gestaltung. - Stuttgart: Verlag Freies Geistesleben, 1975. (Zitiertitel: Schatz) beschreibt Umstülpungen aus Tetraederringen und Polyedern mit einer höheren Flächenzahl.

Schatz verwendet die Bezeichnung "Umstülpen" - wenn bei Figuren oder Körpern das Innere nach außen gestülpt, das Äußere nach innen gewendet wird - sowohl für den Vorgang des Umstülpens selbst als auch für das Ergebnis dieses Vorgangs: den umgewandelten bzw. neu entstandenen Körper. Auch der ursprüngliche Körper, der durch entsprechende Segmentierung umstülpbar geworden ist, wird dann als Umstülpung bezeichnet. Die durch Segmentierung entstandenen Teilkörper bleiben durch flexible Kantenverbindungen miteinander verbunden. Sie sind somit in bezug auf einen der beiden Nachbar-Teilkörper nach zwei Seiten schwenkbar. Die Teilkörper sind Tetraeder oder Polyeder mit einer höheren Flächenzahl.

Bekannt ist auch folgende Beschreibung: "Ein Kaleidozyklus ist ein dreidimensionaler Ring aus Tetraedern. (...).Verbindet man ... jeweils zwei flexibel an einer Kante, so erhält man eine Kette von Tetraedern. (...). Sobald diese Kette lang genug ist, läßt sie sich zu einem geschlossenen Kreis zusammenfügen. (...). Wegen der flexiblen Scharniere an den Kanten kann man den Ring kontinuierlich durch sein Zentrum drehen." (Schattschneider, Doris; Wallace, Walker: M.C. Escher Kaleidozyklen. Berlin: TACO Verlagsgesellschaft, 1987. - Zitiertitel: Schattschneider).

Die in dieser Veröffentlichung vorgestellten Kaleidozyklen lassen sich als Ganzes in ein zweidimensionales Netz abwickeln. (Schattschneider, S. 9, 10, 35). Diese Überführbarkeit des dreidimensionalen Gebildes in eine zweidimensionale Abwicklung ist ein weiteres Merkmal eines Kaleidozyklus. Bis auf eine Ausnahme besitzen alle Kaleidozyklen ein Zentrum, das auf die "Größe" eines Punktes zusammengezogen ist.

Die Würfelgürtel-Umstülpung bei Schatz und der hier dargestellte Verwandlungskörper lassen sich nicht als Ganzes in ein zweidimensionales Netz abwickeln. In beiden Fällen ist nur jedes Tetraeder einzeln in ein zweidimensionales Netz abwickelbar.

Daraus folgt: Die Bezeichnung "Kaleidozyklus" kann nicht als Synonym für "Umstülpung" verwendet werden, weil bei Schatz auch Umstülpungen dargestellt werden, die nicht in Tetraeder aufgeteilt werden, und weil es Umstülpungen gibt, die sich als Ganzes nicht in ein zweidimensionales Netz abwickeln lassen. Auch haben Kaleidozyklen kein "Inneres"; es gibt bei ihnen keine konvexen Verwandlungsstadien.

Die Umstülpungen bei Schatz weisen nur einen geringen Grad an Verwandlungsfähigkeit auf. Der Würfelgürtel von Schatz läßt sich z.B. in fünf markante Stadien überführen. Dies ist kein Mangel, aber ein Nachteil in bezug auf den Grad an Interessantheit oder Unterhaltungswert, insbesondere für Personen, die kein Interesse für die gedankliche Durchdringung dieser Umstülpungsphänomene aufbringen.

In der Druckschrift DE-U-89 12 392 wird ein Kaleidozyklus aus Tetraeder-Elementen vorgestellt, die aus zwei von einer Grundkante ausgehenden gleichschenkligen Dreiecken sowie zwei rechtwinkligen Dreiecken bestehen.

Die Kaleidozyklen besitzen mit zunehmender Anzahl der Tetraeder auch eine entsprechend große Verwandlungsfähigkeit. Die einzelnen Formen erwecken aber einen sehr chaotischen Eindruck und ähneln einander stark, so daß sie nur wenig einprägsam sind. Hier besteht also der Nachteil der Unübersichtlichkeit bezüglich der einzelnen Umwandlungsschritte. In der Veröffentlichung von Schattschneider wird dieser Nachteil ausgeglichen, indem die Tetraederflächen mit graphischen Motiven von M.C. Escher dekoriert werden.

So hat sich der Erfinder das Ziel gesetzt, bekannte Gestaltungen zu verbessern und ihren Spielanreiz zu erhöhen.

Es wird der Verwandlungskörper vorgestellt, eine Doppelpyramide mit einem regelmäßigen Achteck als gemeinsamer Grundfläche und mit einem Verhältnis von Grundkante b zur Höhe a von $b = 2a \tan 22,5 \text{ Grad}$. Er ist segmentiert in sechzehn gleiche, nicht reguläre Tetraeder durch vier Achsenschnitte (wobei jeweils zugleich die Spitzen, der Höhenfußpunkt und zwei einander gegenüberliegende Ecken der Grundfläche in einer Schnittebene liegen) und eine Schnittebene, in der die Grundfläche liegt, wobei die Tetraeder durch flexible Kantenverbindungen wie folgt zu einer geschlossenen Kette miteinander verbunden sind: Jedes Tetraeder ist mit einem benachbarten Tetraeder an der gemeinsamen Kante a nach zwei Seiten schwenkbar verbunden und mit einem weiteren benachbarten Tetraeder, mit dem es die Grundkante b gemeinsam hat, an der Kante b nach zwei Seiten schwenkbar verbunden.

Der hier vorgestellte Körper gehört zu den Umstülpungen, nur daß die Eigenschaft der Umstülpbarkeit gleichrangig neben andere Eigenschaften zurücktritt. Bedingt durch die Anzahl von sechzehn Tetraedern sind Teile der Kette (Gruppen benachbarter Tetraeder) in Abhängigkeit voneinander beweglich, ohne daß dies Auswirkungen auf andere Teile der Kette hat. Somit können Teile der Kette umgestülpt werden, während unabhängig davon andere Teile der Kette anderen Bewegungsformen unterworfen werden. Außer Umstülpen kommen also noch Klappen und Zusammenlegen als Verwandlungsphänomene in Betracht.

Der Verwandlungskörper bietet eine zur spielerischen oder ernsthaften Beschäftigung anregende Formenvielfalt mit möglichst vielen einprägsamen Verwandlungsstadien. Es ist sehr schwierig, eine genaue Zahl für die verschiedenen Verwandlungsstadien anzugeben, weil je nach Ermessen nicht alle Stadien der Anforderung der Einprägsamkeit entsprechen und beliebig viele Zwischenschritte von einem Stadium zum anderen als eigene Stadien angesehen werden können.

Besonders übersichtlich und einprägsam sind Quadrat, Rechteck und parallele Linien wegen ihrer Symmetrie-Eigenschaften. Deshalb wurden die Tetraeder so dimensioniert und in der Kette angeordnet, daß sich daraus möglichst viele Verwandlungsstadien ergeben, an denen Quadrat und Rechteck als Maß erscheinen. Auch die Anzahl von sechzehn Tetraedern wurde wegen der Symmetrie-Eigenschaften gewählt. Die Verwandlungsstadien sind fast alle zweizählig oder vierzählig symmetrisch. Zudem sind sechzehn Tetraeder noch ohne Schwierigkeiten in nahezu allen Verwandlungsstadien mit zwei Händen zu halten. Die Umwandlungen können mit zwei Händen vorgenommen werden, ohne daß der Verwandlungskörper dabei aufgestützt werden muß.

Je nach Verwandlungsstadium liegen mehrere gleiche Flächen benachbarter oder in der Kette weiter entfernter Tetraeder paßgenau aufeinander. Andere Flächen, die nicht aufeinanderliegen, liegen in einer gemeinsamen Ebene. Dadurch ist der Verwandlungskörper in vielen seiner Formen frei aufstellbar.

Beim Umwandeln stellt man fest, daß man nur dann ohne Anwendung von Gewalt von einem Stadium zum anderen gelangen kann, wenn man sich auf die spezifischen Bewegungsmuster des Umwandlungsvorgangs einläßt. Manuelles Geschick und räumliches Vorstellungsvermögen werden gemeinsam beansprucht. Teilweise kann das eine durch das andere kompensiert werden.

Der erfindungsgemäße Verwandlungskörper gehört wohl am ehesten in die Kategorie der dreidimensionalen Puzzlespiele. Der Unterschied zu anderen Spielen dieser Art liegt darin, daß man keine geometrischen Überlegungen anstellen muß, um zu einem Ergebnis zu kommen. Schon durch bloßes Probieren ergeben sich einzelne Formen. Es besteht dann der Anreiz, eine eher zufällig entstandene Form gezielt zu reproduzieren.

Räumliches Vorstellungsvermögen und eine gewisse manuelle Geschicklichkeit sind sicher von Vorteil, brauchen aber nicht vorausgesetzt zu werden. Es ist möglich, daß durch den Verwandlungskörper die Koordination von Auge und Hand trainiert wird.

Es gibt meist mehrere Möglichkeiten, eine Form in eine andere zu verwandeln oder verschiedene Zwischenstadien zwischen zwei bestimmte Formen einzubeziehen. Dadurch bleibt der Unterhaltungswert des Verwandlungskörpers auch dann noch erhalten, wenn man eine bestimmte Vorgehensweise für eine Verwandlungsform kennt.

Der Verwandlungskörper ist nicht nur als Solitärspiel geeignet, z.B. könnten mehrere Personen in einem Wettbewerb reihum einzeln oder zu zweit verschiedene Formen produzieren.

Die schon erwähnten Bewegungsmuster beim Umwandlungsvorgang haben einen eigenen ästhetischen Reiz, der besonders zur Geltung gebracht werden könnte, indem mehrere Personen mit einem großen, aus einem leichten Material gebauten Verwandlungskörper in einer geometrischen Choreographie agieren.

Bei der farblichen Gestaltung können ästhetische Gesichtspunkte eine Rolle spielen; die Farbgebung sollte mit den Symmetrie-Eigenschaften harmonieren. Sie sollte sich deshalb bei jedem zweiten, vierten oder achten Tetraeder in der Kette wiederholen, wobei ein Tetraeder in einer Farbe gehalten sein kann oder gleiche Farben sich auf den entsprechenden Flächen wiederholen.

Für ambitionierte Benutzer kann durch eine geeignete Farbgebung noch ein zusätzlicher Schwierigkeitsgrad eingebaut werden.

Auch mögen solche sich wiederholenden Farbsequenzen jeweils etwas in der Tönung variieren, damit jedes Tetraeder beim Umwandeln in seinem eigenen Ortswechsel innerhalb der Anordnung verfolgt werden kann und gleichzeitig die anderen, durch die Symmetrie zugeordneten Tetraeder mit im Blick behalten werden können.

Es bietet sich auch an, die Oberflächen mit verschiedenen Strukturmerkmalen auszustatten, um sehbehinderten oder blinden Menschen durch den Verwandlungskörper ein zugleich differenziertes und geordnetes Raumerleben zu ermöglichen.

Mit dieser Vielfalt an Formen, möglichen Übergängen und Farbenkonstellationen kann der Verwandlungskörper auch als eine Art dreidimensionales Tangram vorgestellt werden.

Weitere Vorteile, Merkmale und Einzelheiten der Erfindung ergeben sich aus der nachfolgenden Beschreibung eines bevorzugten Ausführungsbeispiels sowie anhand der Zeichnung.

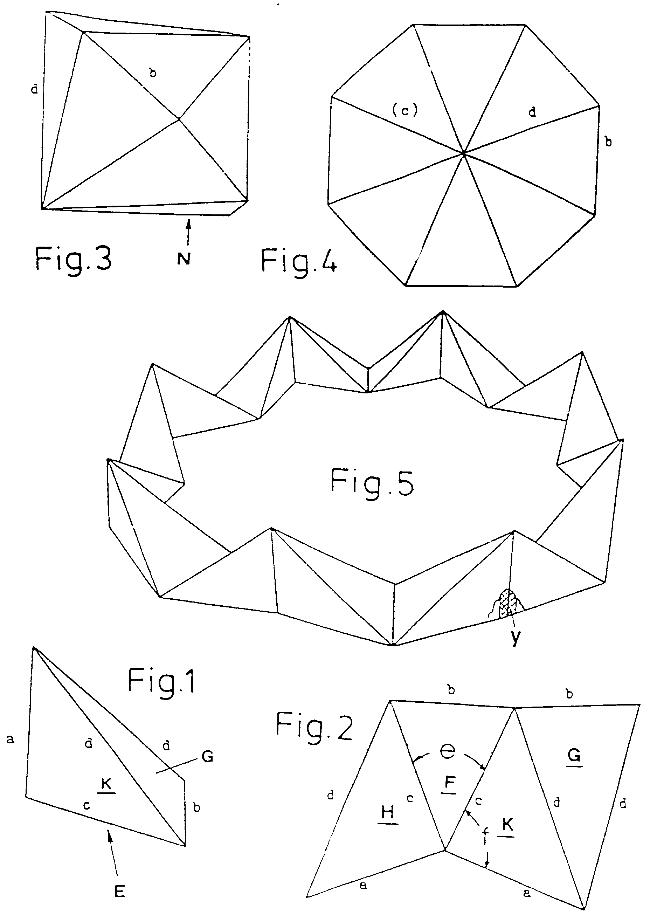

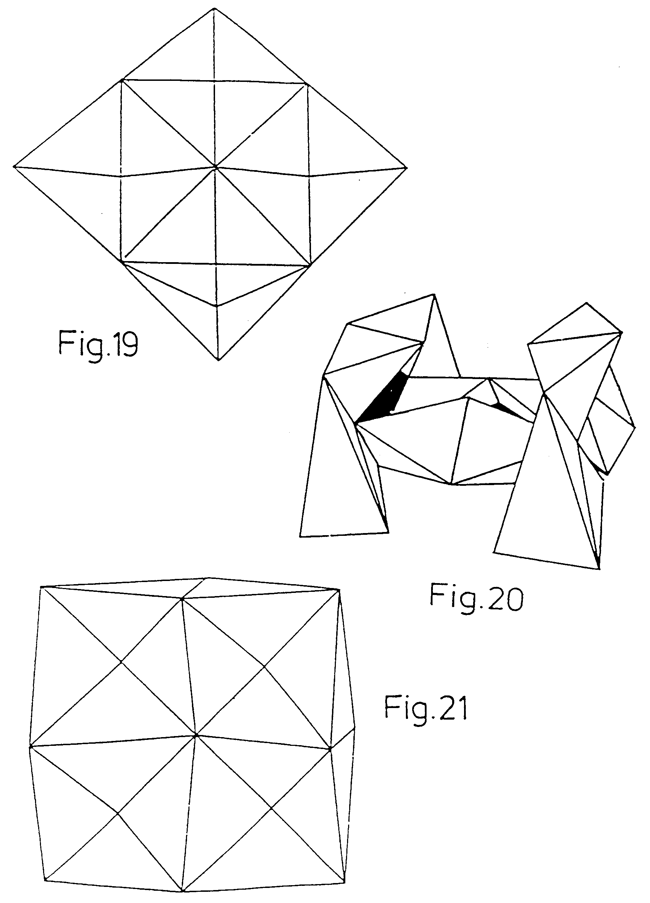

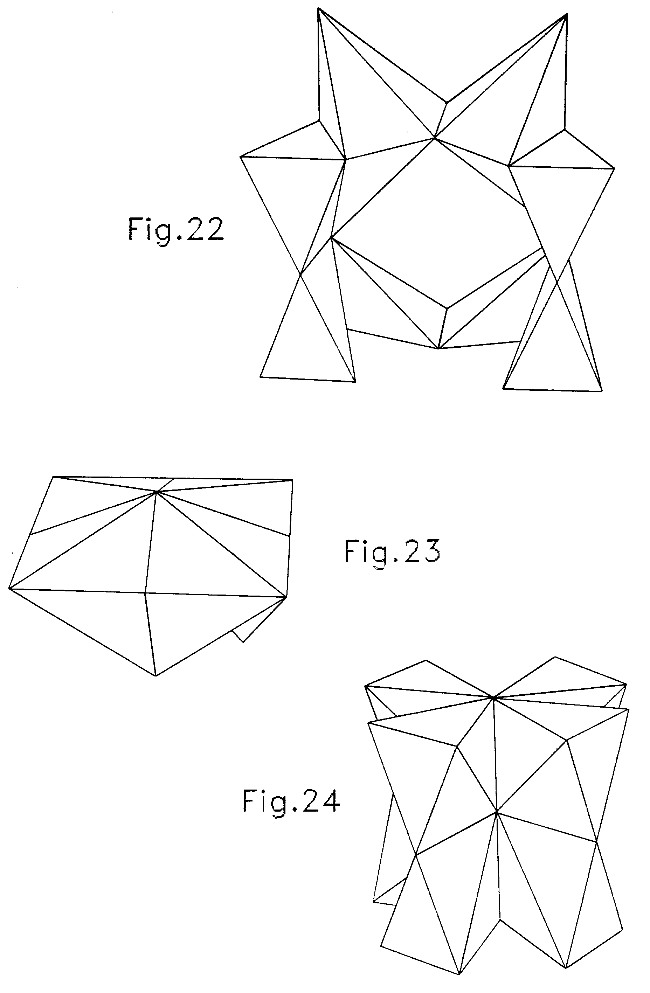

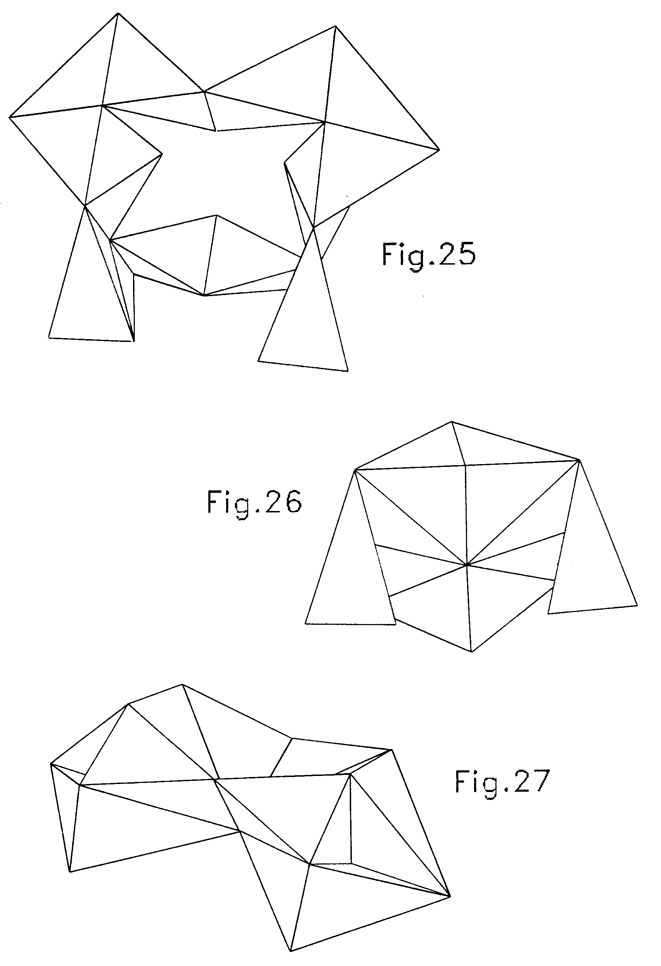

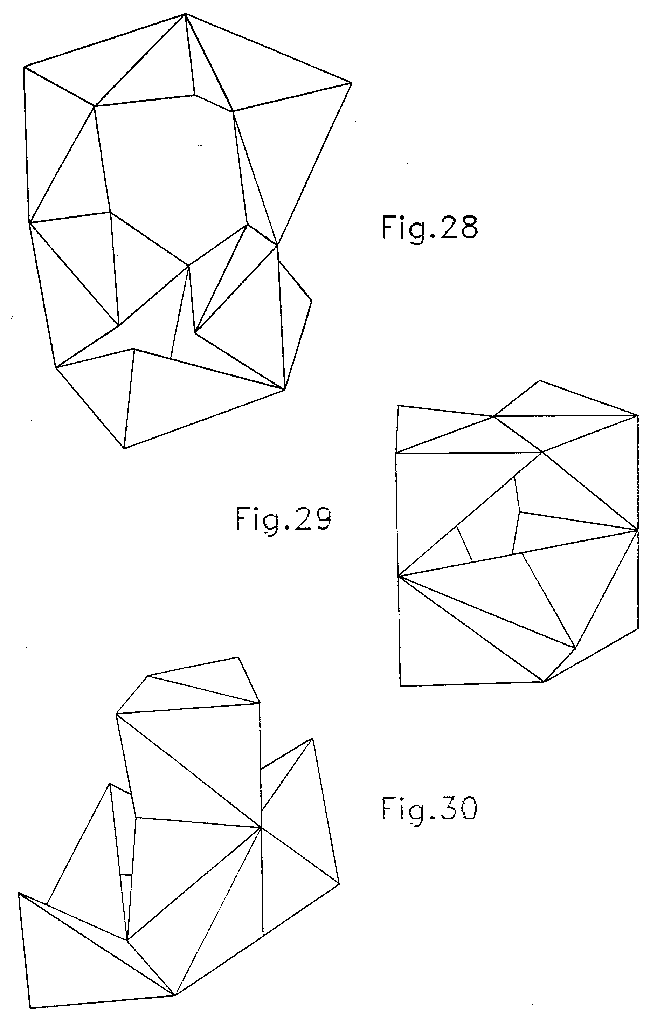

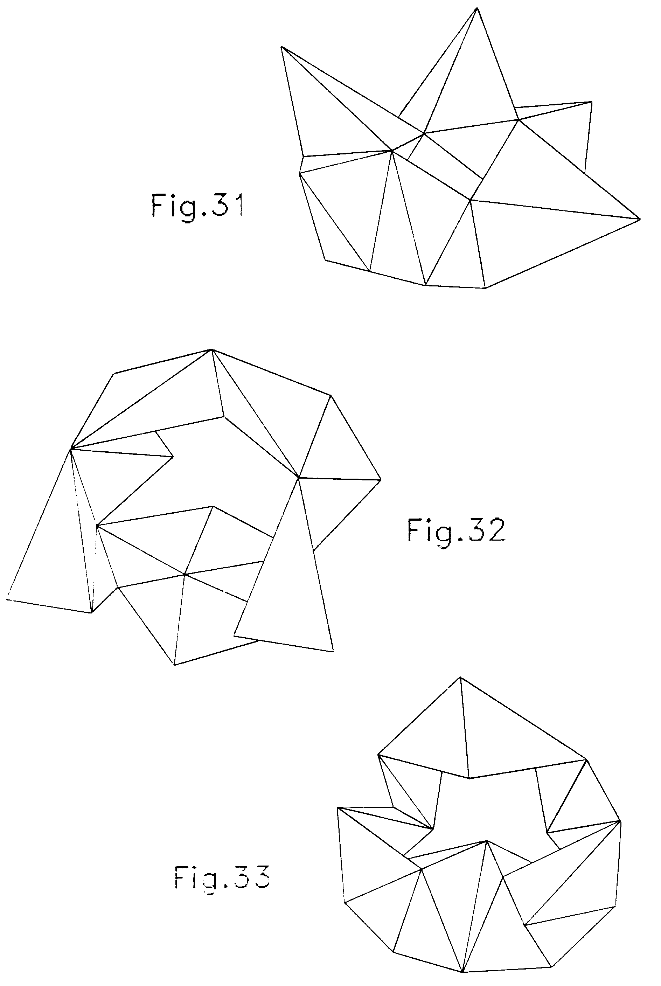

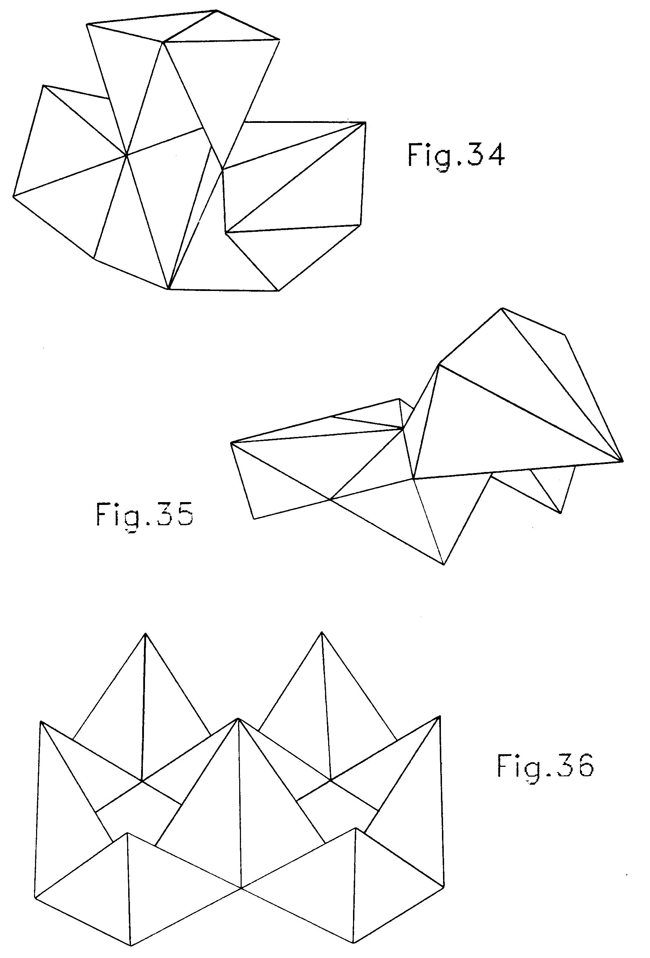

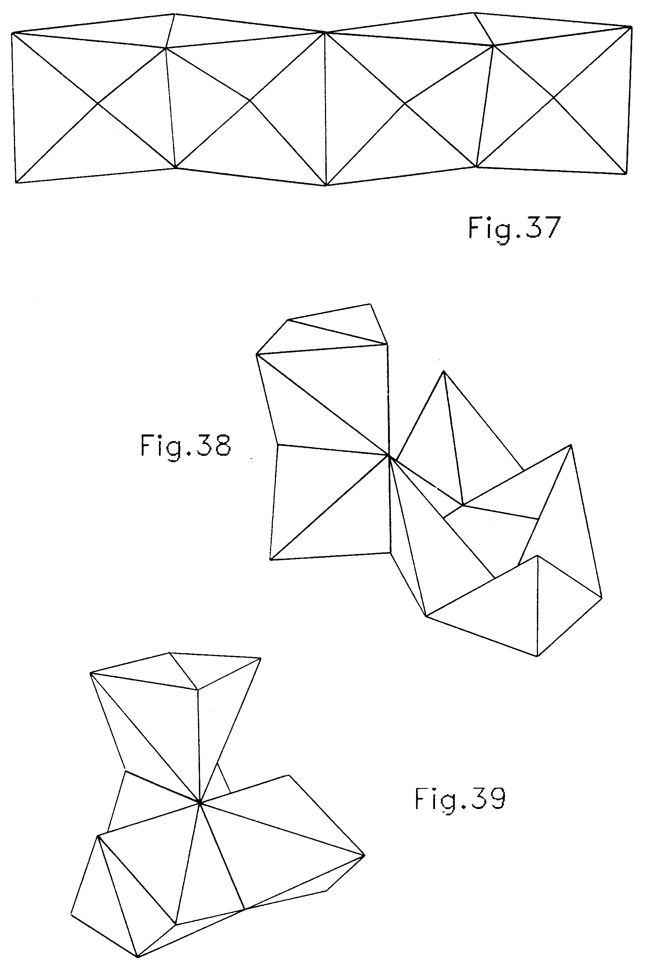

Diese zeigt Fig. 1, 3, 5, 6, 7, 8 bis 39 jeweils in Schrägsicht in

| | |
|---|---|
| Fig. 1: | ein einzelnes Tetraeder in Schrägsicht und |
| Fig. 2: | dessen Abwicklung; |
| Fig. 3, 4: | den Verwandlungskörper in Schrägsicht; |
| Fig. 5: | eine Tetraederkette in Schrägsicht; |
| Fig. 6: | einen Würfelgürtel in Schrägsicht; (6' = Abwicklung eines Tetraeder-Elements); |
| Fig. 7: | einen sechsteiligen Kaleidozyklus in Schrägsicht (7' = Abwicklung eines Tetraeder-Elements); |
| Fig. 8 bis Fig. 39: | |
| | verschiedene Verwandlungsfor |

men in Schrägsicht.

Nachfolgend bezeichnen Kleinbuchstaben die Seiten einer Abwicklung oder die Kanten eines Tetraeders. Gleiche Seiten und die entsprechenden Kanten haben die gleichen Buchstaben.

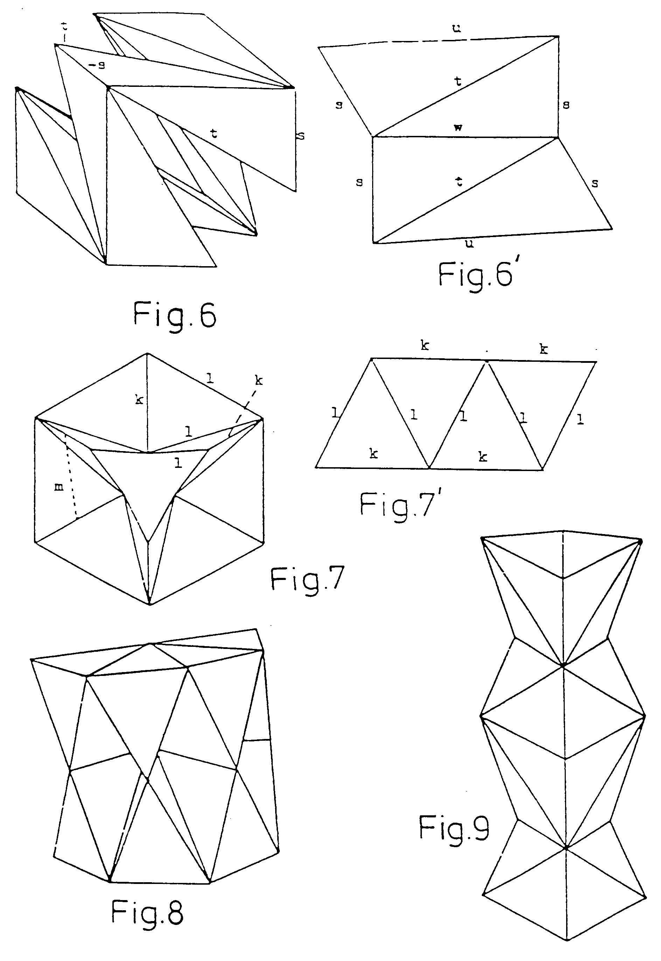

Fig. 1 gibt ein einzelnes Tetraeder E mit sichtbaren Kanten a, b, c, d wieder, Fig. 2 dessen Abwicklung mit den Kanten a bis d. Der von den Seitenkanten c eingeschlossene Winkel e beträgt 45 Grad (Altgrad). Gemäß Fig. 4 liegen alle Grundkanten b parallel zur Betrachtungsebene. Die perspektivisch verkürzten Seitenkanten d in Fig. 4 erscheinen gleich lang wie die deckungsgleich darunterliegenden Seitenkanten c. Die Seite a ist auch die Höhe auf Grundkante b im Dreieck bcc (Feld F in Fig. 2). So beträgt die Grundkante b = 2a tan 22,5 Grad . Der von den Kanten a und c eingeschlossene Winkel f beträgt 90 Grad. Damit sind alle Flächen der Abwicklung, zugleich die Abmessungen der Tetraeder E und des daraus bestehenden Verwandlungskörpers eindeutig bestimmt; die Flächen F und G sind gleichseitige Dreiecke, die Flächen H und K rechtwinklige Dreiecke.

Unter Berücksichtigung der Handhabbarkeit des Verwandlungskörpers beim Umwandeln sollte Kante a im Bereich von 6 cm für Kinder und 9 cm für Erwachsene liegen. Es sind aber bei geeignetem Material sehr viel größere Abmessungen denkbar, wobei zwei oder mehr Personen gemeinsam spielen.

Fig. 3, 4 zeigen den Verwandlungskörper N in seinem konvexen oder "geschlossenen" Stadium. Nach Fig. 5 kann eine Tetraederkette zu diesem Körper lückenlos gepackt werden.

Fig. 6, 6' deuten einen Würfelgürtel (Schatz) mit der Abwicklung eines Tetraeders an. Jedes Tetraeder hat eine in bezug auf seine beiden benachbarten Tetraeder spiegelsymmetrische Abwicklung. Die Seite w entspricht der Würfelkante. Die anderen Seiten haben folgende Abmessungen:

$$s = \frac{w}{3}\sqrt{3} \qquad t = \frac{2w}{3}\sqrt{3} \qquad u = \frac{w}{3}\sqrt{15}$$

In Fig. 7, '7 sind sechs gleiche Tetraeder jeweils mit zwei Tetraedern an den Kanten k zu einem sechsteiligen Kaleidozyklus verbunden. Der Abstand zwischen zwei Kanten k sei m. Daraus ergeben sich folgende Abmessungen:

$$k = \frac{2m}{3}\sqrt{3} \qquad l = \frac{m}{3}\sqrt{15}$$

Das Tetraeder eines sechsteiligen Kaleidozyklus kann so segmentiert werden, daß vier paarweise spiegelsymmetrische Würfelgürtel-Tetraeder entstehen.

In den Fig. 8 - 39 ist der erfindungsgemäße Verwandlungskörper in einigen Verwandlungsstadien oder -formen dargestellt. Sie sind mit Ausnahme der Beispiele der Fig. 9 und Fig. 21 frei aufstellbar.

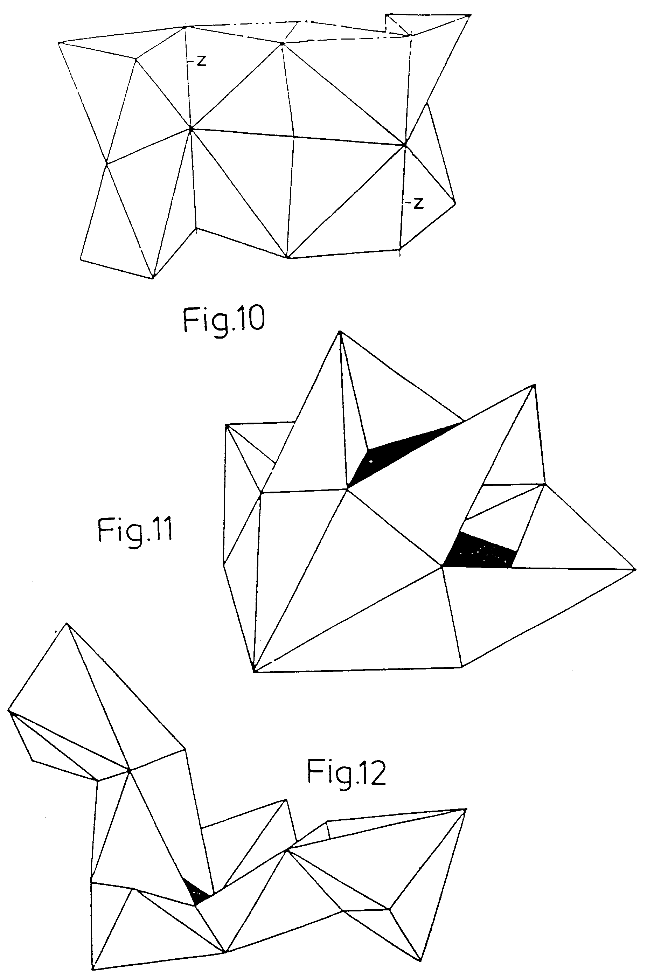

Die Form des Körpers in Fig. 10 kann durch Klappen verändert werden, indem z.B. die vier linken Tetraeder gemeinsam um die Achse Z geschwenkt werden. Unabhängig davon kann das gleiche mit den vier rechten Tetraedern geschehen.

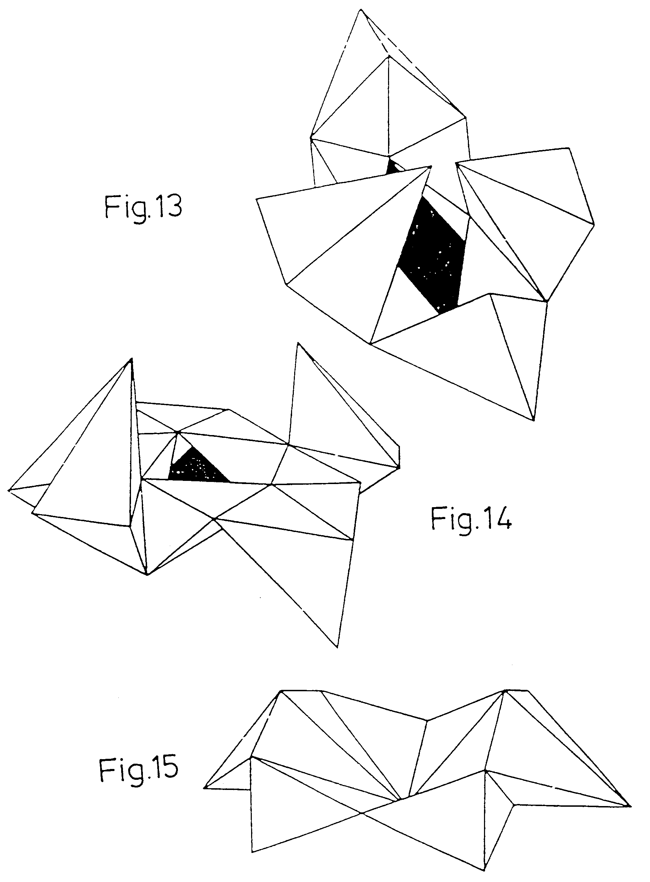

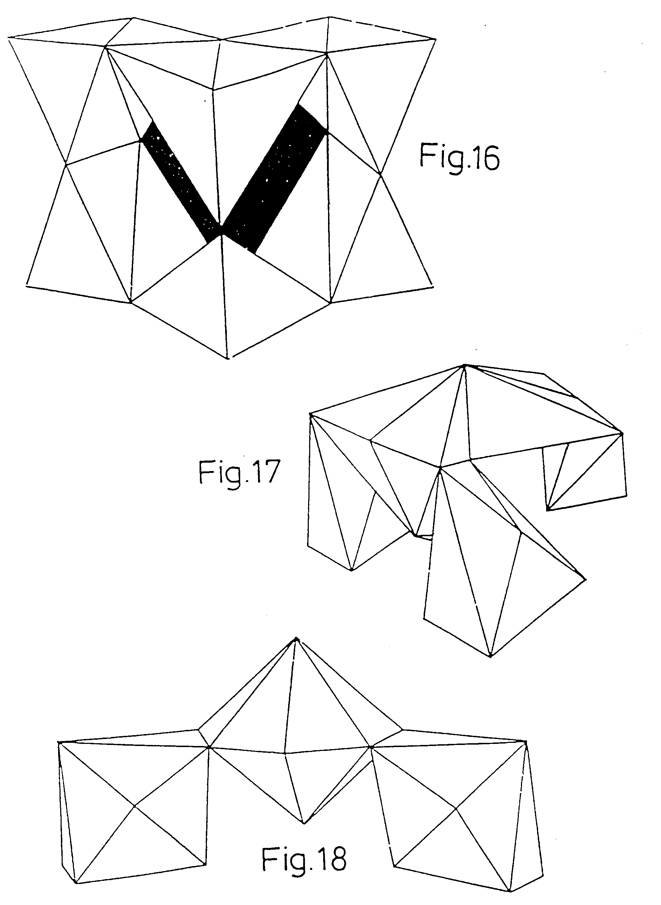

Die Form nach Fig. 13 entsteht durch Aufklappen der Grundform nach Fig. 3, 4; durch weiteres Aufklappen entsteht der Körper der Fig. 14.

Der umgekehrte Vorgang von Fig. 14 zu Fig. 13 und zu Fig. 3, 4 wird als "Zusammenlegen" bezeichnet. Auch die Form der Fig. 11 kann so in Fig. 3, 4 umgewandelt werden.

Fig. 16 entsteht durch Umstülpen des Körpers der Fig. 15. Die meisten Formen können auf verschiedenen Wegen, d.h. über verschiedene Vorstadien erreicht werden. Z.B. kann Fig. 8 hergestellt werden, indem bei Fig. 11 die vorne links nebeneinanderliegenden Tetraeder in ihrer derzeitigen Lage festgehalten werden und alle restlichen Tetraeder nach hinten geklappt werden. Fig. 8 kann aber auch durch Umwandeln von Fig. 14 erreicht werden, ohne daß dabei Fig. 11 als Zwischenstadium entsteht.

Bei einem konkreten Herstellungsbeispiel werden aus Pappe (ca. 300 g/qm) sechzehn Tetraederabwicklungen nach Fig. 2 mit Klebefalz an einer der äußeren Seiten d hergestellt. An je acht Stück wird jeweils an der Seite b bzw. an der Seite a ein Baumwollstreifen eingeklebt, wie er bei y in Fig. 5 angedeutet ist.

Die Abwicklungen werden nun an den Seiten d und an den Seiten mit den Baumwollstreifen zu Tetraedern verklebt. Die so entstandenen Kanten ohne Baumwollstreifen bleiben offen. Die Tetraeder werden miteinander zu einer Kette verbunden, indem die zueinander passenden Baumwollstreifen und die offen gebliebenen Kanten miteinander verklebt werden. Die räumliche Anordnung geht aus Fig. 5 hervor.

Die Besonderheit des Verwandlungskörpers liegt darin, daß nur durch die oben beschriebenen Eigenschaften diese Formenvielfalt in Verbindung mit der Schwerkraftverriegelung möglich ist. Bedingt durch die Schwerkraftverriegelung sind nahezu alle Formen frei aufstellbar, d.h. beim Absetzen auf eine ebene Unterlage behalten sie den jeweils hergestellten Zusammenhalt bei.

Wenn die Höhe a im Bereich von 6 bis 9 cm liegt, können nahezu alle Verwandlungsformen mit zwei Händen herbeigeführt werden, ohne daß der Verwandlungskörper dabei aufgestützt werden muß.

Da sich Teile der Kette (meist Gruppen von vier in der Kette benachbarten Elementen) nur jeweils in Abhängigkeit voneinander bewegen lassen, ist es nicht erforderlich, alle sechzehn Elemente zugleich anzufassen, um das ganze Gebilde in die gewünschte Form zu bringen.

Beim Umwandeln stellt man fest, daß man nur dann ohne Anwendung von Gewalt eine Form verändern kann, wenn man sich auf die spezifischen Bewegungsmuster des Umwandlungsvorganges einläßt. Eine bestimmte frei aufstellbare Form muß zuerst in ein chaotisches Stadium überführt werden, bevor eine andere frei aufstellbare Form entstehen kann.

Die oben geschilderte Ausführung ist eine recht stabile Konstruktion, die auch nach mehrmonatigem intensivem Gebrauch nicht schadhaft wird. Unabhängig von der Wahl des Materials muß jedes Tetraeder einzeln hergestellt werden, weil der Verwandlungskörper bzw. die Tetraederkette nicht als Ganzes in ein zweidimensionales Netz abgewickelt werden kann.

## Patentansprüche

1. Verwandlungskörper aus nicht regulären Tetraedern (E), wobei jedes Tetraeder (E) aus zwei von einer Grundkante ausgehenden gleichschenkligen Dreiecken (F, G) sowie zwei rechtwinkligen Dreiecken (H, K) besteht, wobei die Tetraeder (E) durch flexible Kantenverbindungen zu einer geschlossenen Kette miteinander verbunden sind, indem jedes Tetraeder (E) mit einem benachbarten Tetraeder (E) an der gemeinsamen, senkrecht auf der Grundfläche stehenden Höhe (a) nach zwei Seiten schwenkbar verbunden ist und mit einem weiteren benachbarten Tetraeder (E) an der gemeinsamen Grundkante (b) nach zwei Seiten schwenkbar verbunden ist, gekennzeichnet dadurch, daß die Kette aus sechzehn gleichen, nicht regulären Tetraedern (E) besteht mit einem Verhältnis von Grundkante (b) zu der die Seitenkanten (c, d) verbindenden, senkrecht auf der Grundfläche stehenden Kante (a) von b = 2a tan 22,5 Grad .

## Claims

1. Transformable body of non-regular tetrahedrons (E), in which each tetrahedron (E) consists of two equiliteral triangles (F,G) having a common base, and two night-angled triangles (H,K), whereby the tetrahedrons (E) are coupled via flexible edge couplings to form a closed chain, each tetrahedron (E) being connected to a neighbouring tetrahedron (E) at the common side (a) perpendicular to the base so as to be rotable to either side, and to a further neighbouring tetrahedron (E) at the common side (b) so as to be rotable to either side, such that the resulting chain consists of sixteen identical nonregular tetrahedrons (E) with a relationship of base line (b) to edge (a) perpendicular to the base and connecting the sides (c,d) of b -= 2a tan 22.5 degrees.

## Revendications

1. Corps de transformation de tétraèdres irréguliers (E), chaque tétraèdre (E) se composant, à partir d'une arête de base, de deux triangles isocèles (F,G) ainsi que de deux triangles droits (H,K). Les tétraèdres (E) sont reliés ensemble en une chaîne fermée par une arête souple. Chaque tétraèdre (E) est relié à un tétraèdre (E) voisin par la hauteur commune (a), perpendiculaire à la surface de base, pour pouvoir pivoter de deux côtés et est relié à un autre tétraèdre (E) voisin par l'arête de base commune (b), pour pouvoir pivoter de deux côtés. La chaîne se compose de seize tétraèdres (E) irréguliers identiques avec une proportion de l'arête de base (b) par rapport à l'arête (a) perpendiculaire à la surface de base et reliant les arêtes latérales (c,d) de b = 2a tan 22,5 degrés .

Fig.3

N

Fig.4

Fig.5

y

Fig.1

a

d

d

G

K

c

b

E

Fig.2

b

b

e

G

d

c

F

c

H

d

d

K

a

f

a

Fig.6

Fig.6'

Fig.7

Fig.7'

Fig.8

Fig.9

Fig.10

Fig.11

Fig.12

Fig.13

Fig.14

Fig.15

Fig.16

Fig.17

Fig.18

Fig.19

Fig.20

Fig.21

Fig.22

Fig.23

Fig.24

Fig.25

Fig.26

Fig.27

Fig.28

Fig.29

Fig.30

Fig.31

Fig.32

Fig.33

Fig.34

Fig.35

Fig.36

Fig.37

Fig.38

Fig.39